# FASCICULE DE BREVET EUROPEEN

(11) **EP 1 305 361 B1**
(45) Date de publication et mention de la délivrance du brevet: **21.08.2013**
(21) Numéro de dépôt: 01971818.8
(22) Date de dépôt: 30.07.2001
(51) Int. Cl.: C08K 3/04, C08L 25/06, C08L 23/08, C08L 53/02

(54) **POLYM RE VINYLAROMATIQUE CONDUCTEUR CHARGE AU NOIR DE CARBONE**
RUSS-GEFÜLLTE, LEITFÄHIGE VINYLAROMATISCHE POLYMERE
CONDUCTIVE VINYLAROMATIC POLYMER FILLED WITH BLACK CARBON

(30) Priorité: 02.08.2000 FR 0010199
(43) Date de publication de la demande: 02.05.2003
(73) Titulaire: Total Petrochemicals France, 92091 Paris La Défense Cedex (FR)
(72) Inventeur: DUPUY, Carole, F-27000 Evreux (FR)
(74) Mandataire: Leyder, Francis
(86) Numéro de dépôt international: PCT/EP2001/008816
(87) Numéro de publication internationale: WO 2002/010268

(56) Documents cités:
- EP-A- 0 538 139
- US-A- 5 409 986
- DATABASE WPI Section Ch, Week 199710 Derwent Publications Ltd., London, GB; Class A13, AN 1997-103771 XP002186042 & JP 08 337714 A (DENKI KAGAKU KOGYO KK), 24 décembre 1996 (1996-12-24)
- DATABASE WPI Section Ch, Week 199909 Derwent Publications Ltd., London, GB; Class A18, AN 1999-100186 XP002164309 & JP 10 329278 A (DENKI KAGAKU KOGYO KK), 15 décembre 1998 (1998-12-15)

## Description

L'invention concerne le domaine des compositions conductrices à base de polymère vinylaromatique contenant du noir de carbone.

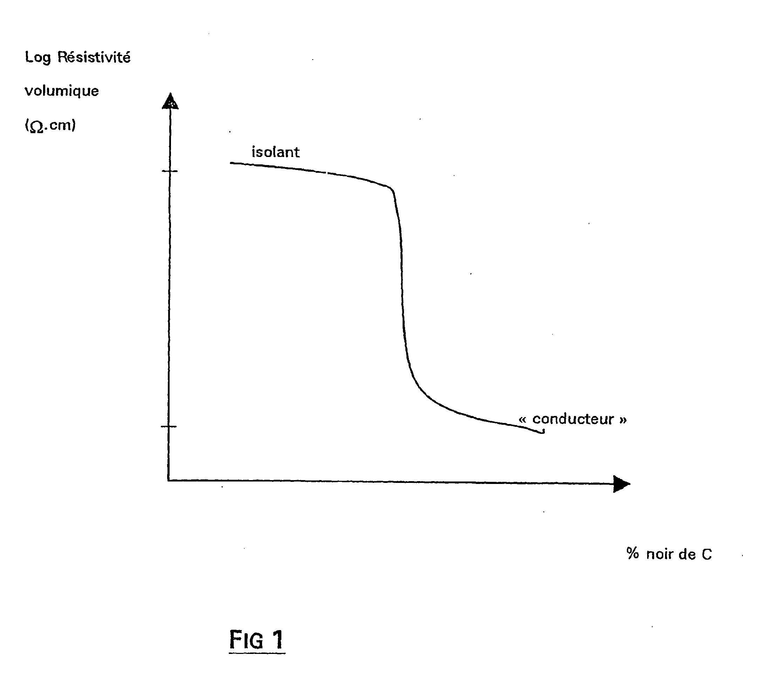

Ces compositions sont généralement utilisées pour entrer en contact avec des composants électroniques comme pour dans des applications de type « emballage pour l'électronique » ou plateau-support pour la manutention de composants électroniques. Dans ces applications, on souhaite pouvoir dissiper facilement des charges électrostatiques pour ne pas endommager les composants électroniques qui sont en contact avec la composition. La composition doit donc présenter une résistivité volumique inférieure à environ 10¹¹ Ω.cm, sans pour autant être totalement conductrice car une décharge éventuelle pourrait alors être violente et endommager les composants. L'introduction de noir de carbone en quantité suffisante dans un polymère permet de faire baisser sa résistivité volumique. Les résistivités intermédiaires entre 10⁵ et 10¹¹ Ω.cm sont généralement difficiles à atteindre en raison de la courbe de percolation du noir de carbone. En effet, dans ce domaine de résistivités, la résistivité varie très fortement avec le taux de noir de carbone et ce dernier doit donc être dosé avec beaucoup d'exactitude. D'une manière générale, on peut considérer qu'on a pour un couple noir de carbone / polymère donné une courbe de percolation dont l'allure est celle de la figure 1.

L'introduction du noir de carbone dans un polymère est en général difficile, surtout dans un matériau du type polystyrène qui accepte mal les charges solides, ce qui se traduit généralement par une insuffisante conductivité et une perte de propriétés mécaniques (en raison de la formation d'agglomérats de noir de carbone et donc également de zone exemptes de noir de carbone et mauvaises conductrices). La dispersion du noir de carbone doit donc être suffisamment bonne pour que le matériau soit conducteur et conserve de bonnes propriétés mécaniques. De plus, ladite dispersion doit être stable lors de la transformation, notamment vis-à-vis des cisaillements élevés rencontrés lors de ladite transformation comme l'injection, sous peine de perte de conductivité et de propriétés mécaniques. En effet, un trop fort cisaillement procure une détérioration des particules de noir de carbone qui perdent de leur conductivité.

De plus, on souhaite que le matériau chargé en noir de carbone conserve une bonne résistance aux chocs, ce qui est connu pour être difficile dans le cas des polymères vinylaromatiques.

L'invention résout les problèmes sus-mentionnés. L'invention concerne une composition comprenant : composition comprenant:
- 35 à 65 % en poids d'un polymère vinylaromatique radicalaire contenant au moins 80 % en poids d'unités polymérisées issues du monomère vinylaromatique,
- 5 à 40 % en poids de copolymère de l'éthylène et d'un (méth)acrylate d'alkyle,
- 2 à 20 % en poids de copolymère à blocs monomère vinylaromatique-diène,
- 5 à 40% en poids de noir de carbone conducteur pour que la composition ait une résistivité volumique, mesurée selon la norme IEC : 93, allant de 1.10⁴ à 1.10⁹ Ohm.cm, et telle que le rapport en masse de la quantité de copolymère de l'éthylène et d'un (méth)acrylate d'alkyle sur la quantité de noir de carbone va de 0,8 à 1,2.

JP 08 337714 A décrit des PS/PPE antistatiques et en page 5 des rapports copolymère ethylene (meth)acrylate (EEA) / noir de carbone (CB) allant de 2/25 à 6/25 ou 3/5 ce qui n'a rien à voir avec le rapport 0,8 à 1,2.

US 5,747,164 décrit des PS/PPE antistatiques et dans les exemples 14 et 22 des rapports copolymère ethylene (meth)acrylate (EEA) / noir de carbone (CB) de 8/12 et 5/12 ce qui n'a rien à voir avec le rapport 0,8 à 1,2.

US 5,707,199 décrit des PS/PPE antistatiques et dans l'exemple 5 un rapport copolymère ethylene (meth)acrylate (EEA) / noir de carbone (CB) de 8/12 ce qui n'a rien à voir avec le rapport 0,8 à 1,2.

JP 10 329278 A décrit des bicouches comprenant une couche de PS chargée de noir de carbone et une couche de copolymère styrene -MMA. Ce ne sont pas les mélanges de l'invention.

La préparation de polymère vinylaromatique est issue de la polymérisation radicalaire d'au moins un monomère vinylaromatique. Elle peut être un copolymère statistique d'un monomère vinylaromatique et d'un monomère diènique. Elle peut également comprendre une matrice d'un polymère vinylaromatique entourant des nodules de caoutchouc tel qu'un polydiène. Un polydiène est issu de la polymérisation d'un monomère diènique.

La préparation de polymère vinylaromatique peut être un polymère vinylaromatique choc modifié par un caoutchouc, c'est-à-dire comprenant une matrice de polymère vinylaromatique entourant des nodules de caoutchouc. Le caoutchouc est généralement un polydiène comme un polybutadiène. Une telle préparation est généralement réalisée par polymérisation radicalaire d'au moins un monomère vinylaromatique en présence de caoutchouc. Cette préparation est généralement un polystyrène choc dont la matrice est en polystyrène et les nodules de caoutchouc sont en polybutadiène, lesdits nodules comprenant généralement une ou plusieurs occlusions de polystyrène.

La préparation de polymère vinylaromatique peut également être un homopolymère d'au moins un monomère vinylaromatique comme le polystyrène cristal.

La préparation de polymère vinylaromatique peut comprendre jusqu'à 20 % en poids, par exemple 2 à 20 % en poids, d'unités polymérisées d'un diène comme le butadiène. Ce diène peut avoir été introduit dans ladite préparation sous la forme d'un caoutchouc dans le cadre de la fabrication d'un polymère vinylaromatique choc.

Par monomère vinylaromatique, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène. Le styrène est un monomère vinylaromatique préféré. La préparation de polymère vinylaromatique peut également comprendre un copolymère acrylonitrile-butadiène-styrène (communément appelé ABS).

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbonène, les 2-alkyl-2,5-norbonadiènes, le 5-éthylène-2-norbornène, le 5-(2-propényl)-2-norbornène, le 5-(5-héxényl)-2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène. Le butadiène est un monomère diènique préféré.

S'agissant du copolymère de l'éthylène et d'un (méth)acrylate d'alkyle, les alkyles peuvent avoir jusqu'à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle. Le MFI (Melt Flow Index ou indice de fluidité à l'état fondu) de ces copolymères est avantageusement compris entre 0,3 et 50 g / 10 min (190°C - 2,16 kg). Avantageusement la teneur en (meth)acrylate est comprise entre 18 et 40% en poids et de préférence entre 22 et 28% en poids. Ces copolymères peuvent être fabriqués par polymérisation radicalaire en tube ou autoclave à des pressions comprises entre 1000 et 2500 bars. Comme copolymère de l'éthylène et d'un (méth)acrylate d'alkyle préféré, on peut citer un copolymère d'éthylène et d'acrylate de butyle.

Le copolymère monomère vinylaromatique-diène est un copolymère multibloc comprenant au moins un bloc de polymère vinylaromatique et au moins un bloc de polydiène, tel ceux communément appelé SBS comme notamment ceux commercialisés sous les marques FINACLEAR ou FINAPRENE. Ces copolymères peuvent avoir un structure linéaire ou radiale. Ce copolymère contient de préférence 10 à 70 % de diène et 90 à 30 % de monomère vinylaromatique. Ces copolymères sont généralement obtenus par polymérisation anionique.

De préférence, le monomère vinylaromatique contenu dans la préparation de polymère vinylaromatique radicalaire et le monomère vinylaromatique contenu dans le copolymère à blocs monomère vinylaromatique-diène sont de même nature et sont généralement du styrène.

De préférence, le diène éventuellement contenu dans la préparation de polymère vinylaromatique radicalaire et le diène contenu dans le copolymère à blocs monomère vinylaromatique-diène sont de même nature et sont généralement du butadiène.

La composition selon l'invention peut être utilisée pour être mise en oeuvre (ou en forme) de diverses manières (compression, injection, extrusion) . La composition selon l'invention reste conductrice après ladite mise en oeuvre. Elle présente une bonne résistance aux chocs et un bon module de flexion. Les articles obtenus après transformation de la composition selon l'invention sont par exemple destinés à des applications dans l'emballage pour l'électronique.

La composition selon l'invention possède des propriétés conductrices. Sa résistivité volumique va de 1.10⁴ à 1.10⁹ et plus généralement de 1.10⁴ à 1.10⁷ ohms.cm quelle que soit la méthode de transformation utilisée. Elle offre un bon compromis de propriétés mécaniques module/choc. Généralement, la résistance aux chocs (Charpy entaillé) de la composition selon l'invention est au moins égale à celle de la préparation de polymère vinylaromatique qu'elle contient.

La quantité de noir de carbone à utiliser dépend de sa qualité et de sa structure. La structure d'un noir de carbone traduit la manière dont les particules carbonées de base, qui constituent le noir de carbone, sont arrangées en agrégats, voire en agglomérats. La structure d'un noir de carbone peut être exprimée par sa surface spécifique (mesurée par une méthode d'adsorption d'azote - méthode BET - selon la norme ASTM D 3037-89) ainsi que par son absorption DBP (DBP signifiant dibutylphtalate, mesurée selon la norme ASTM D 2414-90). Le noir de carbone peut être extra-conducteur, c'est-à-dire extra-fin (surface spécifique supérieure à environ 500 m²/g, absorption DBP élevée) et dans ce cas, on pourra en mettre une relativement faible quantité (en général moins de 15% en poids) de façon à obtenir la résistivité souhaitée. Le noir de carbone peut également être simplement conducteur et donc assez grossier (surface spécifique inférieure à 200 m²/g, absorption DBP relativement faible) et dans ce cas il conviendra d'en mettre une relativement forte quantité (en général au moins 15 % en poids) de façon à obtenir la résistivité souhaitée

Pour des raisons de coût, on préfère utiliser un noir de carbone "grossier".

La quantité de copolymère monomère vinylaromatique-diène est de l'ordre de 2 à 20 % en poids, de préférence 2 à 6 % en poids. Il est préférable de mettre cet ingrédient en relativement faible quantité pour des raisons de coût et de façon à ne pas trop faire baisser le module de la composition finale.

Les ingrédients entrant en jeu dans la composition selon l'invention peuvent être mélangés par tout appareil habituellement utilisé pour mélanger ce genre de produits, comme par les malaxeurs, extrudeuses, comalaxeurs, mélangeurs internes. La température de mélange est suffisante pour que la préparation de polymère vinylaromatique, le copolymère de l'éthylène et d'un (méth)acrylate d'alkyle et le copolymère monomère vinylaromatique-diène soient fondus. Généralement, la température de mélange aboutissant à la composition finale va de 200 à 280°C.

De préférence, on réalise dans un premier temps un mélange maître comprenant le noir de carbone et le copolymère de l'éthylène et d'un (méth)acrylate d'alkyle, pour dans un deuxième temps mélanger ledit mélange maître avec la préparation de polymère vinylaromatique et le copolymère monomère vinylaromatique-diène. La préparation de ce mélange maître se fait aussi avec des outils classiques tels qu' un comalaxeur ou un mélangeur interne. Le mélange maître est granulé en vue du deuxième mélange aboutissant à la composition finale. La réalisation préalable du mélange maître procure en quelque sorte une facilité de manipulation du noir de carbone. En effet, le noir de carbone est extrêmement salissant et il peut être avantageux de réaliser le mélange maître (de relativement faible masse comparé à la composition finale) dans un endroit et sur une machine spécifiquement prévus pour sa manipulation pour ensuite réaliser la composition finale (de relativement forte masse comparé au mélange maître) sur une autre installation sans avoir à se soucier des problèmes de salissures liés à la manipulation du noir de carbone. De plus, en procédant en deux étapes comme il vient d'être dit, la composition finale présente une meilleure homogénéité.

A la suite de la réalisation de la composition selon l'invention par le dernier mélange, celle-ci peut être granulée pour être stockée en vue d'une mise en oeuvre (transformation) ultérieure.

La composition peut ne pas comprendre de polyphénylèneoxyde (PPO), ni de copolymère de l'éthylène et de l'acétate d'éthyle, ni de polyester.

L'invention mène à des compositions présentant un excellent compromis de propriétés, notamment une résistivité allant de 1.10⁴ à 1.10⁹ et plus généralement de 1.10⁴ à 1.10⁷ ohms.cm, une excellente résistance aux chocs, pouvant même dépasser 13 kJ/m² (choc charpy entaillé: norme ISO 179 :93), et un fort module pouvant dépasser 1350 et même 1400 Mpa (norme ISO 178 :93).

Dans les exemples, on utilise les matières premières suivantes :
- HIPS : un polystyrène choc contenant environ 10% en poids de butadiène, possédant un indice de fluidité mesuré suivant la norme ISO 1133:91 et à 200°C sous 5 kg d'environ 4 g/10 min., une température Vicat mesurée sous 1 kg suivant la norme ISO 306A d'environ 97°C, un choc Charpy entaillé mesuré sur barreaux injectés 80x10x4 mm suivant la norme ISO 179 :93 compris entre 9 et 11. Ce copolymère est de marque Lacqrène 5240 et est commercialisé par la société ATOFINA.
- EBA : un copolymère d'éthylène et d'acrylate de butyle à environ 17% en poids d'acrylate de butyle, d'indice de fluidité mesuré suivant la norme ISO 1133:91 et à 190°C sous 2,16 kg d'environ 7 g/10 min. Ce copolymère est de marque Lotryl 17BA07 et est commercialisé par la société ATOFINA.
- PP : un polypropylène isotactique fabriqué en phase gaz et selon une catalyse Ziegler-Natta, d'indice de fluidité mesuré suivant la norme ISO 1133:91 et à 190 ° C sous 5 kg d'environ 16 g/10 min., contenant environ 10% en poids de polypropylène atactique. Ce polypropylène est de marque Novolen 1100N et est commercialisé par la société TARGOR.
- Noir de carbone : un noir de carbone grossier, caractérisé par une surface BET d'environ 65 m²/g et une absorption DBP d'environ190 ml/g, commercialisé par la société M.M.M. Carbon sous la dénomination "Ensaco 250 Granular".
- SBS 1: un copolymère linéaire tribloc styrène-butadiène-styrène dont la structure peut être globalement représentée par la formule S1-B-52 dans laquelle S1 et S2 représentent chacun un bloc de polystyrène et B représente un bloc de polybutadiène. Ce copolymère contient 73% en masse d'unités issues du styrène et présente une masse moléculaire moyenne en poids de 120 000, mesurée par chromatographie à perméation de gel sur la base d'un étalonnage polystyrène. Un petit bloc charnière de copolymère statistique styrène-butadiène est situé entre les blocs S1 et B d'une part, et entre les blocs B et S2 d'autre part. Le bloc B a été réalisé à partir de deux sous-blocs de polybutadiène, lesquels ont été réunis par l'intermédiaire d'un agent de couplage difonctionnel. Ce copolymère est de marque Finaclear 520 et est commercialisé par la société ATOFINA.
- SBS 2 : un copolymère radial tribloc styrène-butadiène-styrène dont la structure peut être globalement représentée par la formule S1-B-S2 dans laquelle S1 et S2 représentent chacun un bloc de polystyrène et B représente un bloc de polybutadiène. Ce copolymère contient 40% en masse d'unités issues du styrène. Ce copolymère est de marque Finaprene 602D et est commercialisé par la société ATOFINA.

Dans les exemples qui suivent, on a utilisé les méthodes de caractérisation suivantes:

| | |
|---|---|
| Flexion : | norme ISO 178 :93 |
| Choc Charpy entaillé : | norme ISO 179 :93 |
| Résistivité volumique : | norme IEC 93. |

### Exemples 1 (comparatif) et 2 à 5

Dans ces exemples, on réalise d'abord un mélange maître EBA/noir de carbone 50/50 en masse au moyen d'un comalaxeur Buss dont la vis principale possède un profil adapté aux forts taux de charges (avec bagues de restriction situées avant les zones d'alimentation en charge). La température de mélange est de l'ordre de 200°C. Ce mélange est ensuite ajouté au mélange HIPS/SBS dans une extrudeuse bivis corotatives puis granulés. La température de mélange est ici comprise entre 220 et 260°C. Les granulés sont ensuite transformés sous forme de barreaux 80x10x4 mm et plaques 100x100x4 mm par injection, dans le cas des exemples 1 et 2, sous forme de feuilles d'épaisseur environ 500 µm par extrusion et sous forme de plaques d'épaisseur environ 2 mm par compression.

L'exemple 1 est comparatif car la composition finale ne contient pas de copolymère styrène-butadiène.

Les propriétés obtenues sont rassemblées dans le Tableau 1.

### Exemple 6 (comparatif)

Dans cet exemple, on mélange tous les composants sur un comalaxeur Buss ; la température de mélange varie entre 210 et 240°C. le noir de carbone est ajouté par un doseur latéral dans la masse fondue. Les granulés obtenus sont transformés sous forme de barreaux 80x10x4 mm et plaques 100x100x4 mm par injection.

Cet exemple est comparatif car la composition réalisée ne contiennent pas d'EBA.

Les propriétés obtenues sont rassemblées dans le Tableau 1.

### Exemple 7 (comparatif)

On procède comme pour l'exemple 3, sauf que l'on ne met pas de copolymère styrène-butadiène SBS2. Les propriétés obtenues sont rassemblées dans le Tableau 1.

**TABLEAU 1**

| | | 1 (comparatif) | 2 | 3 | 4 | 5 | 6 (comparatif) | 7 (comparatif) |
|---|---|---|---|---|---|---|---|---|
| COMPOSITION | | | | | | | | |
| HIPS | | 58 | 43,5 | 53,5 | 56 | 56 | 53,5 | 58 |
| EBA | | 21 | 26 | 21 | 21 | 21 | | 21 |
| PP | | | | | | | 21 | |
| Noir de carbone | | 21 | 26 | 21 | 21 | 21 | 21 | 21 |
| SBS1 | | | 4,5 | 4,5 | 2 | | 4,5 | |
| SBS2 | | | | | | 2 | | |
| PROPRIETES | | | | | | | | |
| Module de flexion (MPa) | Barreaux injectés | 1364 | 1142 | 1418 | 1419 | 1410 | 2430 | 1394 |
| Choc Charpy entaillé (kJ/m2) | Barreaux injectés | 2,8 | 14,2 | 13,6 | 8,4 | 9,7 | 1,6 | 3,0 |
| Résistivité Volumique (Ω.cm) | Plaques compressées | 1,2 10⁵ | 7.2 10⁴ | | | | 6.0 10⁴ | 8,1 10⁵ |
| | Feuilles extrudées | 3,6 10⁵ | 5,1 10⁵ | | | | | |
| | Plaques injectées | 1,6 10⁵ | 4,9 10⁴ | | | | | |

## Revendications

1. Composition comprenant:
- 35 à 65 % en poids d'un polymère vinylaromatique radicalaire contenant au moins 80 % en poids d'unités polymérisées issues du monomère vinylaromatique,
- 5 à 40 % en poids de copolymère de l'éthylène et d'un (méth)acrylate d'alkyle,
- 2 à 20 % en poids de copolymère à blocs monomère vinylaromatique-diène,
- 5 à 40% en poids de noir de carbone conducteur pour que la composition ait une résistivité volumique, mesurée selon la norme IEC : 93, allant de 1.10⁴ à 1.10⁹ Ohm.cm, et telle que le rapport en masse de la quantité de copolymère de l'éthylène et d'un (méth)acrylate d'alkyle sur la quantité de noir de carbone va de 0,8 à 1,2.

2. Composition selon la revendication précédente **caractérisée en ce qu'**elle comprend une quantité nécessaire et suffisante de noir de carbone conducteur pour que la composition ait une résistivité volumique, mesurée selon la norme IEC : 93, allant de 1.10⁴ à 1.10⁷ Ohm.cm.

3. Composition selon l'une des revendications précédentes **caractérisée en ce que** le vinylaromatique radicalaire contient de 2 à 20 % en poids d'unités polymérisées d'un diène.

4. Composition selon l'une des revendications 1 ou 2 **caractérisée en ce que** le polymère vinylaromatique radicalaire est un homopolymère.

5. Composition selon l'une des revendications 1 à 3 **caractérisée en ce que** le polymère vinylarornatique radicalaire comprend une matrice de polymère vinylaromatique entourant des nodules de caoutchouc.

6. Composition selon la revendication précédente **caractérisée en ce que** le caoutchouc est un polydiène.

7. Composition selon la revendication précédente **caractérisée en ce que** le polydiène est un polybutadiène.

8. Composition selon l'une des revendications précédentes **caractérisée en ce que** la teneur en (meth)acrylate dans le copolymère de l'éthylène et d'un (méth)acrylate d'alkyle est comprise entre 18 et 40% en poids.

9. Composition selon la revendication précédente **caractérisée en ce que** la teneur en (meth)acrylate dans le copolymère de l'éthylène et d'un (méth)acrylate d'alkyle est comprise entre 22 et 28% en poids.

10. Composition selon l'une des revendications précédentes **caractérisée en ce que** le copolymère de l'éthylène et d'un (méth)acrylate d'alkyle est un copolymère d'éthylène et d'acrylate de butyle.

11. Composition selon l'une des revendications précédentes **caractérisée en ce que** le copolymère à blocs monomère vinylaromatique-diène contient 10 à 70 % de diène et 90 à 30 % de monomère vinylaromatique.

12. Composition selon l'une des revendications précédentes **caractérisée en ce que** le noir de carbone est présent à raison d'au moins 15 % en poids et présente une surface spécifique, mesurée selon la norme ASTM D 3037-89 par adsorption d'azote, inférieure à 200 m2/g.

13. Composition selon l'une des revendications précédentes **caractérisée en ce que** le copolymère à blocs monomère vinylaromatique-diène est présent à raison de 2 à 6 % en poids.

14. Composition selon l'une des revendications précédentes **caractérisée en ce que** le monomère vinylaromatique du polymère vinylaromatique radicalaire et le monomère vinylaromatique du copolymère à blocs monomère vinylaromatique-diène, est le styrène.

15. Composition selon l'une des revendications précédentes **caractérisée en ce que** le diène du copolymère à blocs monomère vinylaromatique-diène est le butadiène.

16. Composition selon l'une des revendications précédentes **caractérisée en ce que** sa résistance aux chocs charpy entaillé selon norme ISO 179:93, est au moins égale à celle du polymère vinylaromatique qu'elle contient.

17. Composition selon l'une des revendications précédentes **caractérisée en ce qu'**elle ne comprend ni polyphénylèneoxyde (PPO), ni copolymère de l'éthylène et de l'acétate d'éthyle, ni polyester.

18. Composition selon l'une des revendications précédentes **caractérisée en ce qu'**elle a une résistance aux chocs charpy entaillé dépassant 13 kJ/m2 (norme ISO 179:93), et un module de flexion supérieur à 1350 (norme ISO 178:93).

19. Composition selon l'une des revendications précédentes **caractérisée en ce qu'**elle a une résistivité volumique, mesurée selon la norme IEC : 93, allant de 1.10⁴ à 1.10⁷ Ohm.cm, et un module de flexion (norme ISO 178:93) supérieur à 1400 Mpa.

20. Procédé de fabrication d'une composition de l'une des revendications précédentes **caractérisé en ce que** l'on réalise dans un premier temps un mélange maître comprenant le noir de carbone et le copolymère de l'éthylène et d'un (méth)acrylate d'alkyle, pour dans un deuxième temps mélanger ledit mélange maître avec la préparation de polymère vinylaromatique et le copolymère monomère vinylaromatique-diène.

21. Utilisation d'une composition de l'une des revendications 1 à 19 pour entrer en contact avec des composants électroniques.

## Patentansprüche

1. Zusammensetzung, umfassend:
- 35 - 65 Gew. % eines vinylaromatischen, radikalen Polymeren, das mindestens 80 Gew. % polymerisierte Einheiten aus einem vinylaromatischen Monomeren enthält;
- 5 - 40 Gew. % eines Copolymeren aus Ethylen und einem Alkyl-(Meth-)Acrylat,
- 2 - 20 Gew. % eines Copolymeren aus vinylaromatischen Dien-Monomerblöcken,
- 5 - 40 Gew. % leitfähiger Ruß, damit die Zusammensetzung einen nach der Norm IEC:93 gemessenen Durchgangswiderstand zwischen 1.10⁴ und 1.10⁹ Ohm/cm aufweist, so dass das Massenverhältnis der Menge an Ethylencopolymer und Alkyl-(Meth-)-Acrylat zur Menge an Ruß zwischen 0,8 und 1,2 liegt.

2. Zusammensetzung nach dem vorstehenden Anspruch, **dadurch gekennzeichnet, dass** sie eine Menge an leitfähigem Ruß umfasst, die erforderlich ist und ausreicht, um der Zusammensetzung einen nach der Norm IEC:93 gemessenen Durchgangswiderstand zwischen 1.10⁴ und 1.10⁷ Ohm/cm zu verleihen.

3. Zusammensetzung nach einem der vorstehenden Ansprüche, **dadurch gekennzeichnet, dass** das vinylaromatische, radikale Polymer 2 - 20 Gew. % polymerisierte Einheiten eines Diens enthält.

4. Zusammensetzung nach einem der Ansprüche 1 oder 2, **dadurch gekennzeichnet, dass** das vinylaromatische, radikale Polymer ein Homopolymer ist.

5. Zusammensetzung nach einem der Ansprüche 1 - 3, **dadurch gekennzeichnet, dass** das vinylaromatische, radikale Polymer eine Gummiknötchen umgebende vinylaromatische Polymermatrix umfasst.

6. Zusammensetzung nach dem vorstehenden Anspruch, **dadurch gekennzeichnet, dass** es sich beim Gumi um ein Polydien handelt.

7. Zusammensetzung nach dem vorstehenden Anspruch, **dadurch gekennzeichnet, dass** es sich beim Polydien um ein Polybutadien handelt.

8. Zusammensetzung nach einem der vorstehenden Ansprüche, **dadurch gekennzeichnet, dass** der (Meth-)Acrylatgehalt des Copolymeren aus Ethylen und einem Alkyl-(Meth-)Acrylat zwischen 18 und 40 Gew. % liegt.

9. Zusammensetzung nach dem vorstehenden Anspruch, **dadurch gekennzeichnet, dass** der der (Meth-)Acrylatgehalt des Copolymeren aus Ethylen und einem Alkyl-(Meth-)Acrylat zwischen 22 und 28 Gew. % liegt.

10. Zusammensetzung nach einem der vorstehenden Ansprüche, **dadurch gekennzeichnet, dass** das Copolymer aus Ethylen und einem Alkyl-(Meth-)Acrylat ein Copolymer aus Ethylen und Butylacrylat ist.

11. Zusammensetzung nach einem der vorstehenden Ansprüche, **dadurch gekennzeichnet, dass** das Copolymer aus vinyaromatischen Dien-Monomerblöcken 10 - 70 % Dien und 90 - 30 % vinylaromatisches Monomer enthält.

12. Zusammensetzung nach einem der vorstehenden Ansprüche, **dadurch gekennzeichnet, dass** der Russ in einem Verhältnis von mindestens 15 Gew. % vorliegt und eine nach der Norm ASTM D 3037-89 mittels Stickstoffabsorption gemessene spezifische Oberfläche aufweist, die kleiner 200 m2/g ist.

13. Zusammensetzung nach einem der vorstehenden Ansprüche, **dadurch gekennzeichnet, dass** das Copolymer aus vinylaromatischen Dien-Monomerblöcken in einem Verhältnis von 2 - 6 Gew. % vorliegt.

14. Zusammensetzung nach einem der vorstehenden Ansprüche, **dadurch gekennzeichnet, dass** es sich beim vinylaromatischen Monomeren des radikalen vinylaromatischen Polymeren und dem vinylaromatischen Monomeren des Copolymeren aus vinylaromatischen Dien-Monomerblöcken um Styrol handelt.

15. Zusammensetzung nach einem der vorstehenden Ansprüche, **dadurch gekennzeichnet, dass** das Dien des Copolymeren aus vinylaromatischen Dien-Monomerblöcken Butadien ist.

16. Zusammensetzung nach einem der vorstehenden Ansprüche, **dadurch gekennzeichnet, dass** ihre Charpy-Kerbschlagzähigkeit nach ISO 179:93 mindestens gleich derjenigen des in ihr enthaltenen vinylaromatischen Polymeren ist.

17. Zusammensetzung nach einem der vorstehenden Ansprüche, **dadurch gekennzeichnet, dass** sie weder Polyphenylenoxid (PPO) noch Ethylen- und Ethylacetatcopolymere noch Polyester umfasst.

18. Zusammensetzung nach einem der vorstehenden Ansprüche, **dadurch gekennzeichnet, dass** sie eine Charpy-Kerbschlagzähigkeit aufweist, die 13 kJ/m2 (Norm ISO 179:93) überschreitet, und einen Biegemodul aufweist, der 1350 überschreitet (Norm ISO 178:93).

19. Zusammensetzung nach einem der vorstehenden Ansprüche, **dadurch gekennzeichnet, dass** sie einen nach der Norm IEC:93 gemessenen Durchgangswiderstand zwischen 1.10⁴ und 1.10⁷ Ohm/cm sowie einen Biegemodul (Norm ISO 178:93) aufweist, der 1400 Mpa überschreitet.

20. Verfahren zur Herstellung einer Zusammensetzung nach einem der vorstehenden Ansprüche, **dadurch gekennzeichnet, dass** zunächst ein den Russ und das Copolymer aus Ethylen und einem Acryl-(Meth-)Acrylat umfassendes Masterbatch hergestellt wird, um dann dieses Masterbatch mit dem Präparat aus vinylaromatischen Polymeren und dem Polymeren aus einem vinylaromatischen Dienmonomer zu vermischen.

21. Einsatz einer Zusammensetzung nach einem der Ansprüche 1 - 19, um diese mit elektronischen Komponenten in Kontakt zu bringen.

## Claims

1. A composition comprising:
- 35 to 65 weight % of a radical vinylaromatic polymer containing at least 80 weight % polymerized units derived from the vinylaromatic monomer;
- 5 to 40 weight % of copolymer of ethylene and an alkyl methacrylate;
- 2 to 20 weight % of vinylaromatic monomer-diene block copolymer;
- 5 to 40 weight % of conductive carbon black so that the composition has a volume resistivity measured as per standard IEC:93 ranging from 1.10⁴ to 1.10⁹ Ohm.cm, and such that the weight ratio of the quantity of ethylene and an alkyl methacrylate copolymer to the quantity of carbon black ranges from 0.8 to 1.2.

2. The composition according to the preceding claim, **characterized in that** it comprises a necessary and sufficient quantity of conductive carbon black so that the composition has a volume resistivity measured as per standard IEC: 93 ranging from 1.10⁴ to 1.10⁷ Ohm.cm.

3. The composition according to one of the preceding claims, **characterized in that** the radical vinylaromatic contains from 2 to 20 weight % polymerized units of a diene.

4. The composition according to one of claims 1 or 2, **characterized in that** the radical vinylaromatic polymer is a homopolymer.

5. The composition according to one of claims 1 to 3, **characterized in that** the radical vinylaromatic polymer comprises a matrix of vinylaromatic polymer surrounding rubber nodules.

6. The composition according to the preceding claim, **characterized in that** the rubber is a polydiene.

7. The composition according to the preceding claim, **characterized in that** the polydiene is a polybutadiene.

8. The composition according to one of the preceding claims, **characterized in that** the content of methacrylate in the copolymer of ethylene and an alkyl methacrylate is between 18 and 40 weight %.

9. The composition according to the preceding claim, **characterized in that** the content of methacrylate in the copolymer of ethylene and an alkyl methacrylate is between 22 and 28 weight %.

10. The composition according to one of the preceding claims, **characterized in that** the copolymer of ethylene and an alkyl methacrylate is a copolymer of ethylene and butyl acrylate.

11. The composition according to one of the preceding claims, **characterized in that** the vinylaromatic monomer-diene block copolymer contains 10 to 70 % diene and 90 to 30 % of vinylaromatic monomer.

12. The composition according to one of the preceding claims, **characterized in that** the carbon black is present in a proportion of at least 15 % by weight and has a specific surface area, measured as per standard ASTM D 3037-89 via nitrogen absorption, lower than 200 m²/g.

13. The composition according to one of the preceding claims, **characterized in that** the vinylaromatic monomer-diene block copolymer is present in a proportion of 2 to 6 % by weight.

14. The composition according to one of the preceding claims, **characterized in that** the vinylaromatic monomer of the radical vinylaromatic polymer and the vinylaromatic monomer of the vinylaromatic monomer-diene block copolymer is styrene.

15. The composition according to one of the preceding claims, **characterized in that** the diene of the vinylaromatic monomer-diene block copolymer is butadiene.

16. The composition according to one of the preceding claims, **characterized in that** its impact strength measured with the Charpy V-notch test as per standard ISO 179:93 is at least equal to that of the vinylaromatic polymer contained therein.

17. The composition according to one of the preceding claims, **characterized in that** it it comprises neither polyphenyleneoxide (PPO), nor a copolymer of ethylene and ethyl acetate, nor polyester.

18. The composition according to one of the preceding claims, **characterized in that** it has an impact strength measured using the Charpy V-notch test exceeding 13 kJ/m2 (ISO standard 179:93) and a flexural strength higher than 1350 (ISO standard 178:93).

19. The composition according to one of the preceding claims, **characterized in that** it has a volume resistivity, measured as per standard IEC:93 ranging from 1.10⁴ to 1.10⁷ Ohm.cm and a flexural strength (ISO standard 178:93) higher than 1400 MPa.

20. A method for manufacturing a composition according to one of the preceding claims, **characterized in that** initially a master mix is prepared comprising carbon black and the copolymer of ethylene and an alkyl methacrylate, and secondly said master mix is mixed with the preparation of vinylaromatic polymer and vinylaromatic monomer-diene copolymer.

21. The use of a composition of one of claims 1 to 19 for contacting with electronic components.
